# EUROPEAN PATENT SPECIFICATION

(11) **EP 3 495 294 B1**
(45) Date of publication and mention of the grant of the patent: **07.06.2023**
(21) Application number: 18209043.1
(22) Date of filing: 29.11.2018
(51) Int. Cl.: B65G 65/00, B65G 1/06, B65G 15/12, B65G 1/137, B65G 47/57, B65G 1/04

(54) **A VERTICAL STORAGE LIFT AND A STORAGE AND RETRIEVAL SYSTEM COMPRISING SUCH**
VERTIKALER LAGERLIFT UND LAGER- UND ENTNAHMESYSTEM DAMIT
MONTE-CHARGE VERTICAL ET SYSTÈME DE STOCKAGE ET DE RÉCUPÉRATION LE COMPRENANT

(30) Priority: 08.12.2017 SE 1751515
(43) Date of publication of application: 12.06.2019
(73) Proprietor: Weland Solutions AB, 332 36 Gislaved (SE)
(72) Inventor: LARSSON, Per, 333 75 Reftele (SE); ENLUND, Jon Erik, 335 33 Gnosjö (SE); ANDREASEN, Lars, 412 54 Göteborg (SE); KARLSSON, Björn, 331 51 Värnamo (SE)
(74) Representative: Bergenstråhle & Partners AB

(56) References cited:
- EP-A1- 0 678 461
- WO-A1-01/27002
- DE-A1- 19 637 949
- DE-U1-202006 000 147
- JP-A- S61 124 424
- US-A1- 2004 265 114

## Description

### Technical field

The present invention relates generally to storage and retrieval systems. More specifically, the invention relates to a so called vertical storage lift for use in a storage and retrieval system.

### Background art

There are numerous solutions for storage and retrieval of goods, both for in-house supply of material to different work stations, for example to and from an assembly line, and for direct delivery of goods to a customer directly from a warehouse. The growing e-commerce is driving the development of effective storage and fast retrieval of goods, for picking of the order and delivery to a customer. These solutions are more or less completely automatic solutions, supervised by a computer system for manage of all goods and their certain position in the system.

One such solution is a storage and retrieval system comprising several aisles and rows running in different directions and on different floor levels. Further, the system comprising elevators to reach the different floor levels. Typically, the goods are transported in and out from storage racks along rails or roller tracks, in the different aisles and rows to an elevator, and is then transported up or down to a certain level by the elevator. After this, the goods are transported by for example carts to the correct position in the storage rack or out from the storage rack, for use in production or for further transport for example to a customer. The cart ejects the goods into a shelf or picks up the goods from a shelf, or a storage rack or the like. The advantage of this kind of solution is that the goods may be picked up from the storage rack and can be delivered to a certain position for order picking, for use in production etc. Of course, the goods may be stored automatically by transporting the goods in the opposite way to load the storage racks with goods. Drawbacks with this system are for example that the system is expensive, it occupies a lot of floor space, and that the transport speed is limiting the effectiveness if the system is scaled to larger warehouse facility.

Another more compact solution is a three-dimensional grid system of storage spaces, where the goods are stored in special bins arranged in the grid system at different positions and at different depth in the grid (x, y, z). The system is controlled by a computer system and the goods are picked up by a plurality of autonomous shuttles positioned on a two-dimensional rail grid on top of the three-dimensional grid. The shuttles are powered by rechargeable batteries and operates autonomously on top of the grid and each shuttle comprises a lift that allows it to pick and place bins in the grid. The bins are delivered to ports where articles may be picked from the bin by a robot or a person. The system is smart in that way that high-consumption articles are stored high up in the grid, while low-consumption articles are positioned further down in the grid. The system is also scalable, but the drawbacks are for example the need of special bins and that it is time consuming to pick bins from lower levels, which affects the speed of the system. It is also a very expensive system and it is only suitable for smaller goods.

Another solution is to use so-called vertical storage lifts, which is a common solution for providing storage of goods in a vertical direction, and for displaying the goods/articles just in front of the vertical storage lift, for a robot or a person, mainly for use in order picking for production supply or the like. The goods are normally positioned on trays arranged above each other in a storage rack or in shelfs. The storage racks are normally positioned in front of and behind a vertical elevator which is arranged to pick up a tray from the storing position in the rack, transport it vertically down to the display port and eject the complete tray to a picking position. When an article is picked from the tray, the complete tray is drawn into the elevator again and is transported up by the elevator and delivered to the shelf again. In this way, the vertical storage lift is a stand-alone storage, operating only in the vertical direction. It is also a common solution to gather a plurality of such vertical lifts side-by-side, to scale the storage solution. Some advantages with the vertical storage lift are the speed of the delivery of articles to the display port and that the height of the articles is allowed to vary since the trays may be positioned freely in the storage rack (no fixed floor levels). Further advantages are that the type of articles may vary on the same tray and within the same storage lift, and also that there is no need of special storage bins or the like since it is possible to place the articles directly on the tray. The drawback with this solution is that, as the articles are placed on a tray, the articles need to be picked up from the tray by man power or robots, for further transport in the warehouse or the facility, for example by a roller track, a truck, a wagon or the like.

One solution is presented in WO01/27002 A1 which discloses a vertical storage lift according to the preamble of claim 1. In particular, the document discloses a method and device for storing warehouse goods in and/or removing the same from a warehousing device. According to said method, at least one warehouse goods carrier is brought into a loading or unloading position, in which it is loaded with warehouse goods to be stored or unloaded of warehouse goods to be removed. In said position, the warehouse goods carrier is located in the loading or unloading position in the transport shaft of the warehousing device.

Since a vertical storage lift is fast and has a great freedom in positioning different kinds of articles on the same tray and in the same vertical storage lift unit, it is very interesting for use in the fast-growing e-commerce. Within this field, it is a high demand to be able to pick and deliver an order within just a few hours. The other presented prior art solutions are not sufficiently fast for larger warehouses, why the vertical storage lift is a better choice. The problem is that the vertical storage lifts of today don't provide automatic transport out from the vertical storage lift, for further transport on a roller track or similar to a specific end position in a warehouse. Consequently, there is a need for a new type of vertical storage lift in a storage and retrieval system that can perform also the automatic delivery of goods/articles out from or into the vertical storage lift unit for further handling or storing.

### Summary of the invention

It is an object of the invention to address at least some of the problems and issues outlined above. It is possible to achieve these objects and others by using a vertical storage lift as defined in claim 1.

According to the invention, a vertical storage lift is provided, for use in a storage and retrieval system. The vertical storage lift comprises a frame structure arranged with vertical columns and horizontal beams for forming the frame structure for the vertical storage lift. The vertical storage lift further comprises at least one tray, arranged for carrying and storing goods, and the tray comprises a bottom on which the goods are carried. The vertical storage lift also comprises at least one storage rack, arranged in the frame structure, and which is arranged for storing of one or several trays, one above the other in the storage rack. The storage rack is arranged to store the trays in a substantially horizontal position. In the frame structure, adjacent to the storage rack is an elevator arranged, which elevator is arranged to move vertically in the frame structure by means of vertical transportation means. Preferably, two storage racks are arranged on respective sides of the elevator. Further, the elevator comprises tray carrier means arranged at a bottom of the elevator, which is arranged for carrying the tray when it is in the elevator. The elevator further comprises storage driving means, arranged for transporting the tray in a horizontal direction between the tray carrier means of the elevator and the storage rack. Said tray carrier means thereby is used for picking up the tray from the storage position in the rack and leave it in the elevator, and also for placing the tray in the storage rack after vertical transportation by the elevator. The vertical storage lift further comprises ejecting driving means, which are arranged in a fixed position at a lower part of the frame structure. The ejecting driving means is arranged for transporting the goods away from the tray in a substantially horizontal direction, when the tray is in a lower position. For doing that, the tray comprises a slot in the bottom, which slot is arranged to receive at least a portion of the ejecting driving means, such that a top surface of the ejecting driving means extends above the bottom of the tray. It is crucial that the tray is carried in a lower position/in a lowest position in the elevator, when the tray is moved up and down by the elevator, because of that the tray with the slot should be able to receive at least a portion of the ejecting driving means, for transportation of the goods away from the tray, by the ejecting driving means. The ejecting driving means is for example a belt drive, chain drive, a belt conveyor or the like, which transports the goods away from the tray, when the tray arrives to an ejecting position. In this position the ejecting driving means protrudes up through the slot in the bottom of the tray, why the goods will rest on the ejecting driving means instead of the bottom of the tray. By this, the goods may be transported away from the tray, without the tray leaving the elevator.

By such vertical storage lift, all advantages of a vertical storage lift are achieved, like speed and the freedom in positioning different kinds of articles on the same tray as discussed above. Further, by such an arrangement it is possible to unload or load the tray automatically, and deliver the goods from the vertical storage lift to the storage and retrieval system without the need of picking the goods from the tray by hand or by robots, which is not possible with known solutions.

According to an embodiment, the elevator with its tray is positional in any height relative to the top surface of the ejecting driving means. Since the goods may vary in terms of weight, height and overall dimensions, the tray itself may for some goods be designed in different ways. For heavy goods, the tray might need to be more robust, and for example the thickness of the tray therefore larger, or the sides of the tray higher, to gain more stability of the complete tray. Depending on the goods stored on the tray, a computer arranged for supervising the vertical storage lift and the storage and retrieval system, knows exactly in which position the elevator, i.e. the tray, must be positioned relative to the top surface of the ejecting driving means, to enable ejecting of a specific goods from the tray.

According to the invention, the ejecting driving means comprising a first portion arranged to fit in the slot, and a second portion arranged at a distance from the first portion, which is outside the tray when the tray is in its lower position. In this way the goods are transported away from the tray with the first portion in a preferred direction, and the second portion of the ejecting driving means receives the goods from the first portion for further transport or for parking the goods for some time. When the specified goods have left the tray, the elevator may leave its lower position to deliver the tray with remaining goods to the storage rack and to get a new tray, for a new delivery. In the opposite way, goods may arrive to the vertical storage lift from the storage and retrieval system, for delivery to the second portion of the ejecting driving means, and for further loading of the tray in the elevator by means of the second and the first portion of the ejecting driving means. Automatic loading of trays in prior art solutions include at least one middle step of picking to and from a roller track, a wagon, a truck or the like.

According to the invention, the vertical storage lift comprises a driving arrangement, which comprises a first ejecting driving means and a second ejecting driving means, arranged in line with each other, for forming the driving arrangement. The respective ejecting driving means is arranged to be driven independently relative each other, such that the goods are transportable away from the tray in any of a first direction and a second direction, wherein the second direction is an opposite direction relative to the first direction. In this way goods may be stored in two rows on the tray for delivery in the first and/or the second direction, alternatively one large item (goods) may get in contact with both the ejecting driving means for transport in either of the first or the second direction. Thus, goods may leave the vertical storage lift in one or two directions for further transport, or for example leave in one (front) direction and have a buffer zone in the other (back) direction. Thus, a flexible vertical storage lift is disclosed, which also can operate very fast and effectively in a storage and retrieval system.

According to yet another embodiment, the second portion of the first ejecting driving means is a transfer zone and the second portion of the second ejecting driving means is a buffer zone. By such an arrangement, it is possible for example to eject goods or store goods temporarily in the buffer zone for a better flexibility and total speed of the system.

According to an embodiment, the transfer zone and/or the buffer zone comprises a lifting device. A combination with a lifting device in the transfer zone and/or the buffer zone increases the flexibility with possibility to change the position of the goods from one row of goods to another row of goods on the tray, if the tray comprises a plurality of rows with goods

According to the invention, the vertical storage lift comprises a driving pair, which driving pair comprises two driving arrangements arranged parallel to each other. The first ejecting driving means of the two parallel driving arrangements are driven by a common first shaft and the second ejecting driving means of the two parallel driving arrangements are driven by a common second shaft, such that the goods are transportable away from the tray in any of a first (front) direction and a second (back) direction. By combining two driving arrangements to a pair with a simultaneous drive of the first ejecting driving means and the second ejecting driving means respectively, a better control of the goods from the tray is achieved.

According to an embodiment, the vertical storage lift comprises a driving cluster. The driving cluster comprising a plurality of driving pairs, wherein each driving pair is arranged to be driven independently relative each other, such that different goods in contact with different driving pairs are transportable away from the tray in any of the first direction and the second direction, independently of each other. The driving cluster is preferably designed with a suitable number of driving pairs, depending on for example the size of the goods to be stored on the tray. Since the ejecting driving means, and by that the driving cluster, is arranged in a fixed position at a lower part of the frame structure and by that not following the elevator, it is possible to have a higher level of complexity of the drives. It is far more complicated to achieve that flexibility with the ejecting driving means attached to and following the elevator, instead of the fixed position in the frame structure. It is also easy facilitate service and replace individual ejecting driving means since they are positioned near floor level, and it is also possible to just change driving cluster and trays if the goods in the vertical storage lift are shifting in size or the like. This is not possible in prior art solutions.

According to an embodiment, the tray comprises a first stop edge and a second stop edge arranged along long sides of the tray for preventing the goods from falling off the tray. The stop edge also contributes to the strength of the tray and may vary in height depending on for example the weight of the goods, i.e. heavy goods may need a more robust tray. Thus, the stop edges serve as stops as well as strengthens the tray, and since the positioning of the elevator in relation to the top surface of the ejecting driving means is controllable, different heights/ dimensions of the stop edge is not a problem. The system adjusts the position of the elevator such as the level of the top surface of the ejecting driving means is above the top of the stop edge, and the goods can leave the tray without problems.

According to an embodiment, each ejecting driving means is a belt drive arranged with rollers mounted on a respective gable. Each gable is arranged with at least one slot for forming of the first and second portion of the ejecting driving means, i.e. forming a distance between them, and the rollers are arranged such as the belt drive runs around the slot/slots of the gable, to not interfere with the slot. Further, the gable with its slot is dimensionally coordinated with the slot in the tray to be able to receive the tray in the slot of the gable. In that way, the tray may be lowered down in the gable, to allow the ejecting driving means to come in contact with the bottom of the goods.

According to an aspect of the invention, a storage and retrieval system is disclosed. The storage and retrieval system comprising a vertical storage lift according to any of the embodiments above and further comprising a first roller track, arranged in connection to at least a first side of the vertical storage lift. The first roller track is arranged for transporting goods to and from the vertical storage lift. By such an arrangement, a flexible and fast storage and retrieval system is achieved which overcomes the drawbacks of known systems for space effective storage in combination with automatic delivery of goods around the storage and retrieval system.

According to an embodiment, the storage and retrieval system comprises a plurality of vertical storage lifts according to the above-mentioned embodiments, which storage lifts are arranged side by side, forming a row of storage lifts. Further, the plurality of vertical storage lifts is arranged with at least a first side in connection to a first roller track, for transporting goods to and from the vertical storage lifts.

According to an embodiment, the storage and retrieval system comprises second roller track arranged in connection to a second side of each vertical storage lift. By such an arrangement it is possible to eject goods from the vertical storage lift in any of the first and the second direction. Further, it is possible to rearrange the goods within or between different storage lifts, by using one of the roller tracks for changing position of the goods in relation to the tray.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a storage and retrieval system comprising a plurality of vertical storage lifts according to the invention, and also a number of roller tracks, for further transportation of goods in the system.
Fig. 2 is a perspective view of a driving pair comprising ejecting driving means for ejecting goods from a tray, according to the invention.
Fig. 3a is showing a driving cluster of driving pairs according to Fig. 2, arranged on a common bottom frame.
Fig. 3b is showing the driving cluster according to Fig. 3a, arranged at a lower part of a frame structure of the vertical storage lift.
Fig. 4a is showing an elevator with a tray in a lower position of the frame structure of the vertical storage lift, in which position goods (not shown) can be transported out of the tray by means of one or several driving arrangements.
Fig. 4b is a perspective view of a vertical storage lift with one side cut out showing a storage rack for storing trays and the elevator of Fig. 4a.
Fig. 4c is a zoomed view of a part of the elevator of Fig. 4a-b, showing a storage driving means for transporting the tray in a horizontal direction between the storage rack and the elevator.
Fig. 5a is a top view of the tray and the driving cluster as well as a number of goods on the tray, in a buffer and when transported from the tray to a roller track.
Fig. 5b is a zoomed view of the tray and the driving arrangements according to the invention, when the tray is in a lower position, where a part of respective driving arrangements protruding up through the tray.

### Detailed description

Briefly described, a vertical storage lift and a storage and retrieval system comprising one or several such storage lifts, are provided. The vertical storage lift as well as the storage and retrieval system is a fast, cost-efficient and well-functioning solution, and specially well-suited for the growing e-commerce business. The invention utilizes the advantages of a normal vertical storage lift in terms of space-saving storing and rapid picking of goods from a storage rack and delivery to a picking position. The difference is that by having ejecting driving means in a fixed lower position and a tray arranged with slots adapted for the ejecting driving means, it is possible to choose a special item from the tray, eject it from the tray and deliver to the roller tracks for further transportation to an end station, without a picking operation from the tray to the roller track. The system is totally automatic.

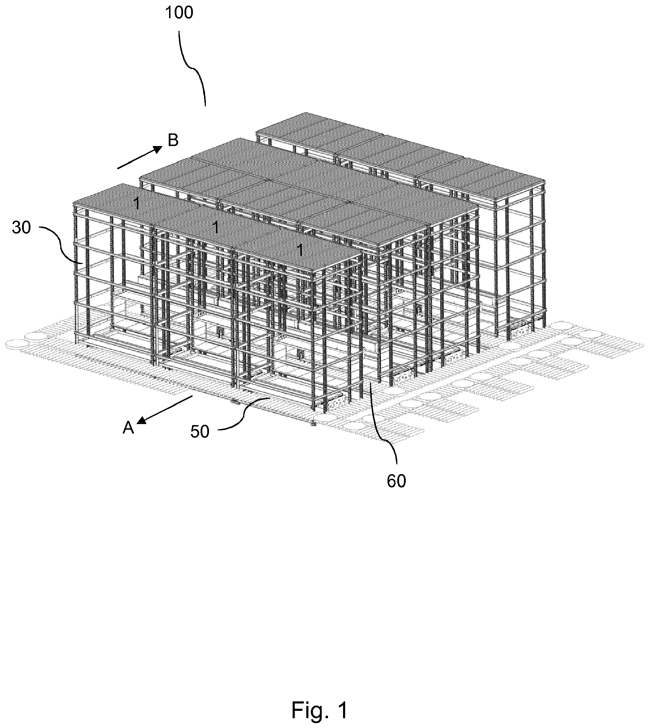

Fig. 1 shows a perspective view of a storage and retrieval system 100 comprising a plurality of vertical storage lifts 1 according to the invention. In the figure, three vertical storage lifts 1 are connected to a row of vertical storage lifts 1. Several other rows of storage lifts are also visible in the figure. Each vertical storage lift 1 comprises two storage racks 30 for storing one or several trays 20 (not visible), one above the other in the storage rack 30. In a first direction A, in connection of respective vertical storage lift 1 is a first roller track 50 arranged, and in connection to a second direction B relative to the vertical storage lifts 1 is a second roller track 60 arranged. By the roller tracks 50, 60 goods 2 may be transported to and from the vertical storage lifts 1 and further away in the storage and retrieval system 100 to one or several end stations, by means of several other roller tracks, for example as in Fig. 1. It is also possible to cluster a number of rows of vertical storage lifts 1, freestanding or together back to back as seen in the figure.

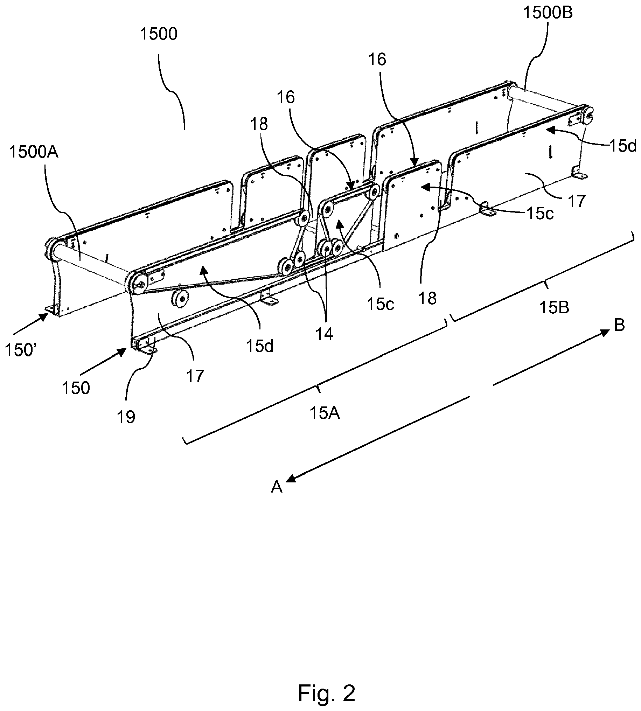

Fig. 2 shows a perspective view of a driving pair 1500 comprising two parallel driving arrangements 150, 150' for ejecting goods 2 away from a tray 20 (goods and tray not visible in the figure). One such driving arrangement 150 will now be described in more detail. The driving arrangement 150 comprises a first ejecting driving means 15A and a second ejecting driving means 15B arranged in line with each other, wherein the ejecting driving means 15A, 15B are arranged to be driven independently relative each other, such that the goods 2 are transportable away from the tray 20 in any of a first direction A and a second direction B. The first ejecting driving means 15A and the second ejecting driving means 15B are designed in the same way, but are arranged mirror-inverted relative each other on a beam 19 for forming the driving arrangement 150. The driving means 15A, 15B respectively comprises a first portion 15c and a second portion 15d arranged at a distance from the first portion 15c, and in the preferred embodiment the ejecting driving means discloses a belt drive arranged with rollers 14 mounted on a respective gable 17 which is attached to the beam 19. Each gable 17 is arranged with a slot 18, and the rollers 14 are arranged such as the belt drive runs around the slot 18 to not interfere with the slot 18, i.e. the slot 18 is open upwards to be able to receive the tray 20 (not visible). In Fig. 2 the gable 17 is actually two gables 17 arranged on respective sides of the rollers 14 and the belt drive, but one gable 17 of the first ejecting driving means 15A is removed in the figure to show the interior. The gables 17 with its slot 18 is dimensionally coordinated with a slot 25 in the tray 20 (not visible and which will be further explained below) to be able to receive the tray 20 in the slot 18 of the gable 17. It can also be seen that the first ejecting driving means 15A and the second ejecting driving means 15B are arranged in line with each other at a distance from each other to also form a slot between them, for receiving of the tray 20. A top surface 16 of the first portion 15c of the respective first ejecting driving means 15A and the second ejecting driving means 15B extends above a bottom 21 of the tray 20 (not visible) when it is in its lower position/ejecting position in the vertical storage lift 1.

The first ejecting driving means 15A, 15A' of the two parallel driving arrangements 150, 150' are driven by a common first shaft 1500A and the second ejecting driving means 15B, 15B' of the two parallel driving arrangements 150, 150' are driven by a common second shaft 1500B, such that the goods 2 are transportable away from the tray 20 in any of a first direction A and a second direction B. The driving of the first shaft 1500A and the second shaft 1500B is not further described.

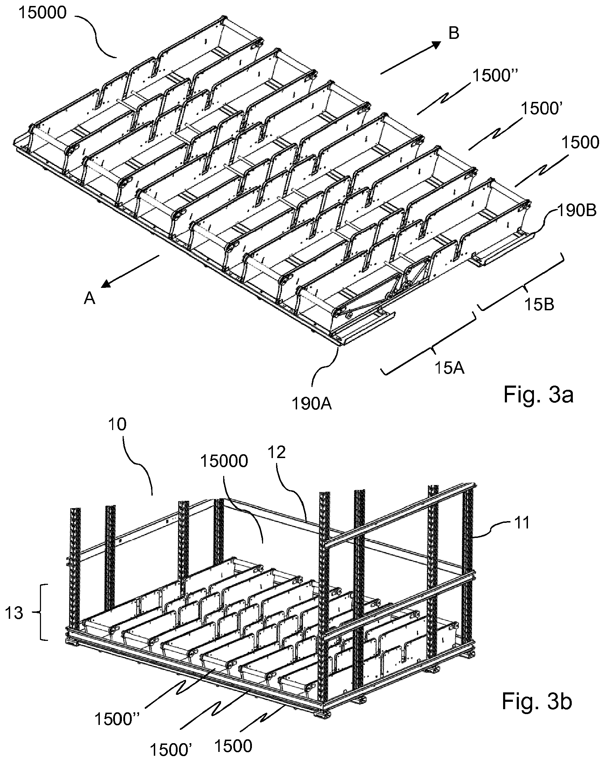

Fig. 3a shows a driving cluster 15000, which comprises a plurality of driving pairs 1500, 1500', 1500",... according to Fig. 2, arranged on common bottom frames 190A 190B. Each driving pair 1500 1500', 1500",... is arranged to be driven independently relative each other, such that different goods 2 (not shown) in contact with different driving pairs 1500 1500', 1500",... are transportable away from the tray 20 in any of the first direction A and the second direction B, independently of each other. By arranging the driving pairs 1500 1500', 1500",... in a driving cluster 15000 it is possible to replace or redesign the complete driving cluster 15000 depending on the goods to be stored. It is also easy to incorporate motors or the like for the driving of the each individual driving pairs 1500 1500', 1500",... or for connection of two or more driving pairs 1500 1500', 1500",... to a common motor etc., within the driving cluster 15000. One option could also be to include a lifting device in the cluster, for example transverse the driving pairs in an extra slot, or between the driving pairs 1500 1500', 1500",... in the second portion 15d of the first ejecting driving means 15A (see Fig. 2), for be able to eject goods 2, lift it up in the second portion 15d, and eject goods from the second ejecting driving means 15B in the first direction A. Thus, it is possible to deliver goods from a second row on the tray 20 in the first direction A, despite that goods 2 are positioned in a first row on the tray 20.

Fig. 3b shows the driving cluster 15000 according to Fig. 3a, arranged at a lower part 13 of a frame structure 10 of the vertical storage lift 1. The frame structure 10 comprises vertical columns 11 and horizontal beams 12 for forming the frame structure 10. By "a lower part" is meant in connection to the floor, as in the figure or on a lower frame structure at a distance from the floor or the level on which the goods 2 are to be delivered/ejected from the storage lift 1.

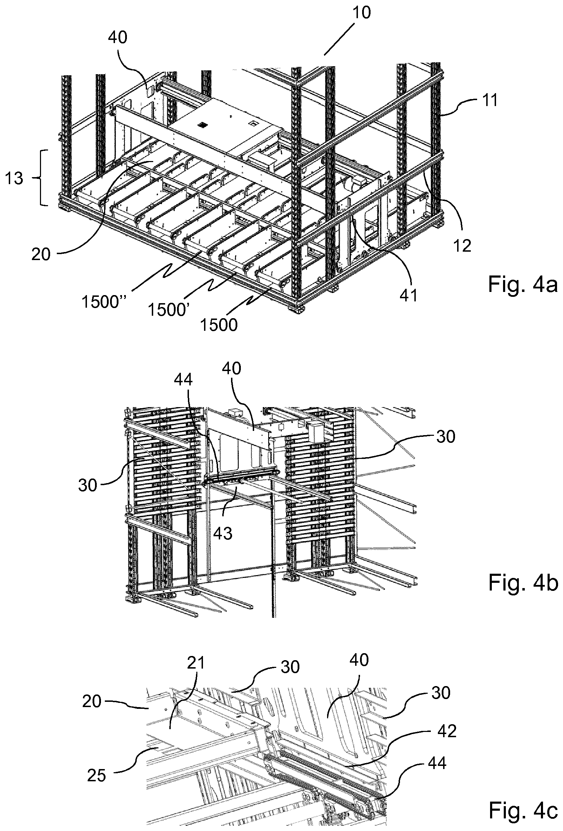

Fig. 4a-c shows the driving cluster 15000 and the lower part 13 of the frame structure 10 of Fig. 3b, as well as an elevator 40 carrying the tray 20. The elevator 40 is arranged in the frame structure 10, adjacent to the storage rack 30, and in the preferred embodiment of the vertical storage lift 1, the elevator 40 is arranged between two storage racks 30. The elevator 40 is arranged to move vertically in the frame structure 10 by means of vertical transportation means 41, which for example may be gear wheels in cooperation with gear racks. The elevator 40 further comprises tray carrier means 42, which are arranged at a bottom 43 of the elevator 40. Said tray carrier means 42 is arranged for carrying the tray 20 during vertical transport by the elevator 40 in the frame structure 10. The elevator 40 further comprises storage driving means 44, arranged for transporting the tray 20 in a horizontal direction between the tray carrier means 42 of the elevator 40 and the storage rack 30. The storage driving means 44 may be of different kinds, and the main purpose is to pick the tray 20 from the storage position and deliver it to the elevator 40, for transport down to the ejecting position, or vice versa. In Fig. 4c the bottom 21 of the tray 20 is visible as well as a number of slots 25. The slots 25 may vary in terms of dimensions but is dimensionally coordinated with at least the first portion 15c of the respective ejecting driving means 15, for allowing the first portion 15c to pass through the tray 20, which can be seen in Fig. 4a. The number of slots 25 corresponds with the number of first portions 15c of the ejecting driving means 15.

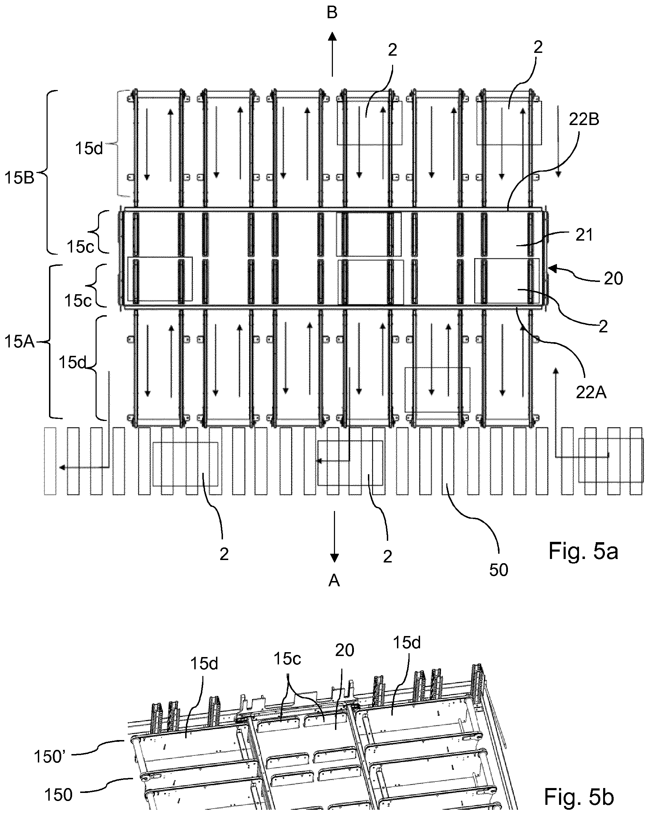

Fig. 5a shows a top view of the tray 20 and the driving cluster 15000 as well as a number of smaller goods 2 positioned on the tray 20 in two rows. Further, some goods 2 are already ejected in the second direction B, by means of the first and second portion 15c, 15d of the second ejecting driving means 15B, where the second portion 15d of the second ejecting driving means 15B in this case is a buffer zone. Some goods 2 are also ejected in the first direction A by means of the first portion 15c of the first ejecting driving means 15A. One of the goods is at the moment in a transfer zone, which is the second portion 15d of the first ejecting driving means 15A, where it can be put on hold or directly be delivered to the first roller track 50, for further transport to an end position in the storage and retrieval system 100. As can be seen in the right corner of Fig. 5a and indicated by an arrow, one goods are on its way to enter the vertical storage lift 1, for loading the tray 20. As earlier mention, all driving pairs 1500, 1500', 1500"... are possible to control individually, such as the goods 2 may be delivered in any of the first and the second direction A, B, and also may be parked in a wanted position. The complete system is supervised by a computer system which controls the orders, the deliveries and have full control of all goods 2 in the storage and retrieval system 100. The tray 20 further comprises a first stop edge 22A and a second stop edge 22B, arranged along long sides of the tray 20 for preventing the goods 2 from falling off the tray 20. The stop edges 22A, 22B contributes to the strength of the tray 20 and may vary in height depending on for example the weight of the goods 2. Thus, the stop edges 22A, 22B serves as stops as well as strengthens the tray 20, and since the positioning of the elevator 40 in relation to the top surface 16 of the ejecting driving means 15 is controllable, different heights/ dimensions of the stop edge 22A, 22B is not a problem. The system adjusts the position of the elevator 40 such as the level of the top surface 16 of the ejecting driving means 15 is above the top of the stop edge 22A, 22B, and the goods 2 can leave the tray 20 without problems.

Fig. 5b shows a zoomed view of the tray 20 and the driving arrangements 150, 150' with the first and second ejecting driving means 15A, 15B, when the tray 20 is in a lower position. In this position, the first portion 15c is protruding up through the tray 20 and the level of an upper edge of the first stop edge 22A and a second stop edge 22B is a bit below the top surface 16 of the first and second portions 15c, 15d.

Reference to an element in the singular is not intended to mean "one and only one" unless explicitly so stated, but rather "one or more."

## Claims

1. A vertical storage lift (1) for a storage and retrieval system, the vertical storage lift (1) comprising:
a frame structure (10), comprising columns (11) and beams (12),
a tray (20), arranged for carrying goods (2), the tray (20) comprising a bottom (21) on which the goods (2) are carried,
a storage rack (30) arranged in the frame structure (10), which storage rack (30) is arranged for storing of one or several trays (20), one above the other in the storage rack (30), in a substantially horizontal position,
an elevator (40) arranged in the frame structure (10) adjacent to the storage rack (30), the elevator (40) being arranged to move vertically in the frame structure (10) by means of vertical transportation means (41), wherein the elevator (40) comprising tray carrier means (42), arranged at a bottom (43) of the elevator (40), wherein said tray carrier means (42) being arranged for carrying the tray (20), and the elevator (40) further comprising storage driving means (44), arranged for transporting the tray (20) in a horizontal direction between the tray carrier means (42) of the elevator (40) and the storage rack (30),
ejecting driving means (15A, 15B), arranged in a fixed position at a lower part (13) of the frame structure (10), which ejecting driving means (15A, 15B) is arranged for transporting the goods (2) away from the tray (20) in a substantially horizontal direction, when the tray (20) is in a lower position, and the tray (20) comprises a slot (25) in the bottom (21), arranged to receive at least a portion of the ejecting driving means (15A, 15B), such that a top surface (16) of the ejecting driving means (15A, 15B) extends above the bottom (21) of the tray (20),
wherein the ejecting driving means (15A, 15B) comprises a first portion (15c) arranged to fit in the slot (25), and a second portion (15d) arranged at a distance from the first portion (15c), which is outside the tray (20) when the tray (20) is in its lower position,
**characterized in that**:
the vertical storage lift (1) further comprises a driving arrangement (150) which comprises a first ejecting driving means (15A) and a second ejecting driving means (15B) arranged in line with each other, wherein the ejecting driving means (15A, 15B) are arranged to be driven independently relative each other, and further a driving pair (1500) which comprises two driving arrangements (150, 150') arranged parallel to each other, and the first ejecting driving means (15A) of the two parallel driving arrangements (150, 150') are driven by a common first shaft (1500A) and the second ejecting driving means (15B) of the two parallel driving arrangements (150, 150') are driven by a common second shaft (1500B), such that the goods (2) are transportable away from the tray (20) in any of a first direction (A) and a second direction (B), and the slot (25) of the tray (20) is a number of slots (25) corresponding with the number of first portions (15c) of the ejecting driving means (15A, 15B).

2. The vertical storage lift (1) according to claim 1, wherein the elevator (40) is positional in any height relative to the top surface (16) of the ejecting driving means (15).

3. The vertical storage lift (1) according to claim 1 or 2, wherein the second portion (15d) of the first ejecting driving means (15A) is a transfer zone and the second portion (15d) of the second ejecting driving means (15B) is a buffer zone, wherein the transfer zone and/or the buffer zone comprises a lifting device.

4. The vertical storage lift (1) according to any of the preceding claims, wherein a driving cluster (15000) comprising a plurality of driving pairs (1500 1500', 1500",...), each driving pair (1500 1500', 1500",...) being arranged to be driven independently relative each other, such that different goods (2) in contact with different driving pairs (1500 1500', 1500",...) are transportable away from the tray (20) in any of the first direction (A) and the second direction (B), independently of each other.

5. The vertical storage lift (1) according to any of the preceding claims, wherein the tray (20) comprises a first stop edge (22A) and a second stop edge (22B) arranged along long sides of the tray (20) for preventing the goods (2) from falling off the tray (20).

6. The vertical storage lift (1) according to any of the preceding claims, wherein the ejecting driving means (15) is a belt drive arranged with rollers (14) mounted on a respective gable (17), wherein each gable (17) is arranged with a slot (18), and the rollers (14) are arranged such as the belt drive runs around the slot (18) to not interfere with the slot (18), and the gable (17) with its slot (18) is dimensionally coordinated with the slot (25) in the tray (20), to be able to receive the tray (20) in the slot (18) of the gable (17).

7. A storage and retrieval system (100), comprising:
a vertical storage lift (1) according to any of the preceding claims,
a first roller track (50) arranged in connection to at least a first side (A) of the vertical storage lift (1).

8. A storage and retrieval system (100), comprising:
a plurality of vertical storage lifts (1) according to any of claims 1-6, arranged side by side, forming a row of storage lifts (1),
a first roller track (50) arranged in connection to at least first sides (A) of the plurality of vertical storage lift (1).

9. A storage and retrieval system (100) according to any of claim 7 or 8, comprising:
a second roller track (60) arranged in connection to a second side (B) of each vertical storage lift (1).

## Patentansprüche

1. Vertikaler Lagerlift (1) für ein Ein- und Auslagersystem, wobei der vertikale Lagerlift (1) Folgendes umfasst:
eine Rahmenstruktur (10), die Säulen (11) und Träger (12) umfasst,
eine zum Tragen von Gütern (2) angeordnete Ablage (20), wobei die Ablage (20) einen Boden (21) umfasst, auf dem die Güter (2) getragen werden,
ein in der Rahmenstruktur (10) angeordnetes Lagergestell (30), wobei das Lagergestell (30) zum Lagern einer oder mehrerer Ablagen (20) übereinander in dem Lagergestell (30) in einer im Wesentlichen horizontalen Position angeordnet ist,
einen in der Rahmenstruktur (10) dem Lagergestell (30) benachbart angeordneten Aufzug (40), wobei der Aufzug (40) dazu angeordnet ist, sich mittels vertikaler Transportmittel (41) vertikal in der Rahmenstruktur (10) zu bewegen, wobei der Aufzug (40) ein an einem Boden (43) des Aufzugs (40) angeordnetes Ablageträgermittel (42) umfasst, wobei das Ablageträgermittel (42) zum Tragen der Ablage (20) angeordnet ist, und wobei der Aufzug (40) ferner Lagerantriebsmittel (44) umfasst, die zum Transportieren der Ablage (20) in einer horizontalen Richtung zwischen dem Ablageträgermittel (42) des Aufzugs (40) und dem Lagergestell (30) angeordnet sind,
ein Ausstoßantriebsmittel (15A, 15B), das in einer festgelegten Position an einem unteren Teil (13) der Rahmenstruktur (10) angeordnet ist, wobei das Ausstoßantriebsmittel (15A, 15B) dazu angeordnet ist, die Güter (2) in einer im Wesentlichen horizontalen Richtung von der Ablage (20) weg zu transportieren, wenn die Ablage (20) in einer unteren Position ist, und die Ablage (20) einen Schlitz (25) in dem Boden (21) umfasst, der zur Aufnahme mindestens eines Abschnitts des Ausstoßantriebsmittels (15A, 15B) angeordnet ist, so dass sich eine obere Fläche (16) des Ausstoßantriebsmittels (15A, 15B) über dem Boden (21) der Ablage (20) erstreckt,
wobei das Ausstoßantriebsmittel (15A, 15B) einen ersten Abschnitt (15c), der so angeordnet ist, dass er in den Schlitz (25) passt, und einen zweiten Abschnitt (15d) umfasst, der in einem Abstand von dem ersten Abschnitt (15c) angeordnet ist und sich außerhalb der Ablage (20) befindet, wenn die Ablage (20) in ihrer unteren Position ist,
**dadurch gekennzeichnet, dass**:
der vertikale Lagerlift (1) ferner Folgendes umfasst:
eine Antriebsanordnung (150), die ein erstes Ausstoßantriebsmittel (15A) und ein zweites Ausstoßantriebsmittel (15B) umfasst, die aufeinander ausgerichtet angeordnet sind, wobei die Ausstoßantriebsmittel (15A, 15B) dazu angeordnet sind, unabhängig voneinander angetrieben zu werden, und ferner ein Antriebspaar (1500), das zwei Antriebsanordnungen (150, 150') umfasst, die parallel zueinander angeordnet sind, wobei die ersten Ausstoßantriebsmittel (15A) der beiden parallelen Antriebsanordnungen (150, 150') von einer gemeinsamen ersten Welle (1500A) angetrieben werden und die zweiten Ausstoßantriebsmittel (15B) der beiden parallelen Antriebsanordnungen (150, 150') von einer gemeinsamen zweiten Welle (1500B) angetrieben werden, so dass die Güter (2) in einer beliebigen einer ersten Richtung (A) und einer zweiten Richtung (B) von der Ablage (20) weg transportiert werden können, und der Schlitz (25) der Ablage (20) eine Anzahl von Schlitzen (25) ist, die der Anzahl der ersten Abschnitte (15c) der Ausstoßantriebsmittel (15A, 15B) entspricht.

2. Vertikaler Lagerlift (1) nach Anspruch 1, wobei der Aufzug (40) auf einer beliebigen Höhe bezüglich der oberen Fläche (16) der Ausstoßantriebsmittel (15) positioniert werden kann.

3. Vertikaler Lagerlift (1) nach Anspruch 1 oder 2, wobei der zweite Abschnitt (15d) der ersten Ausstoßantriebsmittel (15A) eine Transferzone ist und der der zweite Abschnitt (15d) der zweiten Ausstoßantriebsmittel (15B) eine Pufferzone ist, wobei die Transferzone und/oder die Pufferzone eine Hebevorrichtung umfassen.

4. Vertikaler Lagerlift (1) nach einem der vorhergehenden Ansprüche, wobei ein Antriebsblock (15000) eine Vielzahl von Antriebspaaren (1500, 1500', 1500" ...) umfasst, wobei jedes Antriebspaar (1500, 1500', 1500" ...) dazu angeordnet ist, unabhängig voneinander angetrieben zu werden, so dass unterschiedliche Güter (2) in Kontakt mit unterschiedlichen Antriebspaaren (1500, 1500', 1500" ...) unabhängig voneinander in einer beliebigen der ersten Richtung (A) und der zweiten Richtung (B) von der Ablage (20) weg transportiert werden können.

5. Vertikaler Lagerlift (1) nach einem der vorhergehenden Ansprüche, wobei die Ablage (20) einen ersten Anschlagrand (22A) und einen zweiten Anschlagrand (22B) umfasst, die entlang langer Seiten der Ablage (20) angeordnet sind, um zu verhindern, dass Güter (2) von der Ablage (20) herabfallen.

6. Vertikaler Lagerlift (1) nach einem der vorhergehenden Ansprüche, wobei das Ausstoßantriebsmittel (15) ein Bandantrieb ist, der mit Rollen (14) angeordnet ist, die an einem jeweiligen Giebel (17) montiert sind, wobei jeder Giebel (17) mit einem Schlitz (18) angeordnet ist und die Rollen (14) so angeordnet sind, dass der Bandantrieb um den Schlitz (18) herum läuft, um den Schlitz (18) nicht zu beeinträchtigen, und wobei der Giebel (17) mit seinem Schlitz (18) abmessungsmäßig mit dem Schlitz (25) in der Ablage (20) koordiniert ist, um die Ablage (20) in dem Schlitz (18) des Giebels (17) aufnehmen zu können.

7. Ein- und Auslagersystem (100), umfassend:
einen vertikalen Lagerlift (1) nach einem der vorhergehenden Ansprüche,
eine erste Rollenbahn (50), die in Verbindung mit mindestens einer ersten Seite (A) des vertikalen Lagerlifts (1) angeordnet ist.

8. Ein- und Auslagersystem (100), umfassend:
eine Vielzahl von vertikalen Lagerliften (1) nach einem der Ansprüche 1 - 6, die nebeneinander angeordnet sind und eine Reihe von Lagerliften (1) bilden,
eine erste Rollenbahn (50), die in Verbindung mit mindestens ersten Seiten (A) der Vielzahl von vertikalen Lagerliften (1) angeordnet ist.

9. Ein- und Auslagersystem (100) nach einem der Ansprüche 7 oder 8, umfassend:
eine zweite Rollenbahn (60), die in Verbindung mit einer zweiten Seite (B) jedes vertikalen Lagerlifts (1) angeordnet ist.

## Revendications

1. Système de levage d'entreposage vertical (1) pour un système d'entreposage et de prélèvement, le système de levage d'entreposage vertical (1) comprenant :
une structure (10), comprenant des montants (11) et des lisses (12),
un plateau (20), conçu pour transporter des produits (2), le plateau (20) comprenant un fond (21) sur lequel sont transportés les produits (2),
un support d'entreposage (30) placé dans la structure (10), ledit support d'entreposage (30) étant conçu pour l'entreposage d'un ou de plusieurs plateaux (20), l'un au-dessus de l'autre dans le support d'entreposage (30), dans une position sensiblement horizontale,
un élévateur (40) placé dans la structure (10) de manière adjacente au support d'entreposage (30), l'élévateur (40) étant conçu pour se déplacer verticalement dans la structure (10) par le biais de moyens de déplacement vertical (41), l'élévateur (40) comprenant des moyens de transport de plateau (42), placés au niveau d'une partie inférieure (43) de l'élévateur (40), lesdits moyens de transport de plateau (42) étant conçus pour transporter le plateau (20), et l'élévateur (40) comprenant, en outre, des moyens d'entraînement d'entreposage (44), conçus pour déplacer le plateau (20) dans une direction horizontale entre les moyens de transport de plateau (42) de l'élévateur (40) et le support d'entreposage (30),
des moyens d'entraînement d'éjection (15A, 15B), placés dans une position fixe au niveau d'une partie inférieure (13) de la structure (10), lesdits moyens d'entraînement d'éjection (15A, 15B) étant conçus pour déplacer les produits (2) hors du plateau (20) dans une direction sensiblement horizontale, lorsque le plateau (20) se trouve dans une position inférieure, et le plateau (20) comprenant une fente (25) dans le fond (21), conçue pour recevoir au moins une partie des moyens d'entraînement d'éjection (15A, 15B), de telle sorte qu'une surface supérieure (16) des moyens d'entraînement d'éjection (15A, 15B) s'étende au-dessus du fond (21) du plateau (20), les moyens d'entraînement d'éjection (15A, 15B) comprenant une première partie (15c) conçue pour s'adapter dans la fente (25), et une seconde partie (15d) placée à une certaine distance de la première partie (15c), qui se trouve à l'extérieur du plateau (20) lorsque le plateau (20) se trouve dans sa position inférieure,
**caractérisé en ce que** :
le système de levage d'entreposage vertical (1) comprend, en outre, un système d'entraînement (150) qui comprend un premier moyen d'entraînement d'éjection (15A) et un second moyen d'entraînement d'éjection (15B) placés de façon à être mutuellement alignés, les moyens d'entraînement d'éjection (15A, 15B) étant conçus pour être entraînés indépendamment l'un de l'autre et, en outre, une paire d'entraînement (1500) qui comprend deux systèmes d'entraînement (150, 150') placés parallèlement l'un à l'autre, et les premiers moyens d'entraînement d'éjection (15A) des deux systèmes d'entraînement parallèles (150, 150') sont entraînés par un premier arbre commun (1500A) et les seconds moyens d'entraînement d'éjection (15B) des deux systèmes d'entraînement parallèles (150, 150') sont entraînés par un second arbre commun (1500B), de telle sorte que les produits (2) peuvent être déplacés hors du plateau (20) dans l'une ou l'autre d'une première direction (A) et une seconde direction (B), et la fente (25) du plateau (20) est constituée d'un certain nombre de fentes (25) correspondant au nombre de premières parties (15c) des moyens d'entraînement d'éjection (15A, 15B).

2. Système de levage d'entreposage vertical (1) selon la revendication 1, dans lequel l'élévateur (40) peut être positionné à n'importe quelle hauteur relativement à la surface supérieure (16) des moyens d'entraînement d'éjection (15) .

3. Système de levage d'entreposage vertical (1) selon la revendication 1 ou 2, dans lequel la seconde partie (15d) du premier moyen d'entraînement d'éjection (15A) est une zone de transfert et la seconde partie (15d) du second moyen d'entraînement d'éjection (15B) est une zone tampon, dans lequel la zone de transfert et/ou la zone tampon comprennent un dispositif de levage.

4. Système de levage d'entreposage vertical (1) selon l'une quelconque des revendications précédentes, dans lequel un ensemble d'entraînement (15000) comprend une pluralité de paires d'entraînement (1500, 1500', 1500", ...), chaque paire d'entraînement (1500, 1500', 1500'', ...) étant conçue pour être entraînée indépendamment des autres, de telle sorte que différents produits (2) en contact avec différentes paires d'entraînement (1500, 1500', 1500", ...) peuvent être déplacés hors du plateau (20) dans l'une ou l'autre de la première direction (A) et la seconde direction (B), indépendamment les uns des autres.

5. Système de levage d'entreposage vertical (1) selon l'une quelconque des revendications précédentes, dans lequel le plateau (20) comprend un premier bord d'arrêt (22A) et un second bord d'arrêt (22B) placés le long de côtés longs du plateau (20) pour empêcher les produits (2) de tomber du plateau (20).

6. Système de levage d'entreposage vertical (1) selon l'une quelconque des revendications précédentes, dans lequel les moyens d'entraînement d'éjection (15) sont constitués d'un mécanisme d'entraînement à courroie pourvu de galets (14) fixés sur une paroi (17) respective, dans lequel chaque paroi (17) est pourvue d'une fente (18), et les galets (14) sont placés de telle sorte que le mécanisme à courroie s'étend autour de la fente (18) de façon à ne pas obstruer la fente (18), et la paroi (17) avec sa fente (18) est dotée de dimensions compatibles avec la fente (25) dans le plateau (20), pour pouvoir recevoir le plateau (20) dans la fente (18) de la paroi (17).

7. Système d'entreposage et de prélèvement (100) comprenant :
un système de levage d'entreposage vertical (1) selon l'une quelconque des revendications précédentes,
un premier transporteur à rouleaux (50) placé en association avec au moins un premier côté (A) du système de levage d'entreposage vertical (1).

8. Système d'entreposage et de prélèvement (100) comprenant :
une pluralité de systèmes de levage d'entreposage vertical (1) selon l'une quelconque des revendications 1 à 6, placés côte à côte, formant une rangée de systèmes de levage d'entreposage (1),
un premier transporteur à rouleaux (50) placé en association avec au moins des premiers côtés (A) de la pluralité de systèmes de levage d'entreposage vertical (1) .

9. Système d'entreposage et de prélèvement (100) selon l'une ou l'autre des revendications 7 et 8, comprenant :
un second transporteur à rouleaux (60) placé en association avec un second côté (B) de chaque système de levage d'entreposage vertical (1).
